# EUROPEAN PATENT SPECIFICATION

(11) **EP 0 894 047 B1**
(45) Date of publication and mention of the grant of the patent: **17.05.2000**
(21) Application number: 97915673.4
(22) Date of filing: 27.03.1997
(51) Int. Cl.: B29C 67/24, B29C 39/10

(54) **A PROCESS FOR INDUSTRIAL-SCALE PRODUCTION OF OBJECTS, ADVANTAGEOUSLY OF CONTAINERS SUCH AS SCENT BOTTLES, CLAD IN AGGLOMERATE MATERIAL**
VERFAHREN ZUM SERIENMÄSSIGEN HERSTELLEN VON MIT KÖRNIGEN MATERIALEN UMMANTELTEN GEGENSTÄNDEN, INSBESONDERE BEHÄLTERN WIE PARFÜMFLÄSCHEN
PROCEDE DE PRODUCTION A L'ECHELLE INDUSTRIELLE D'OBJETS, NOTAMMENT DE RECIPIENTS TELS QUE DES FLACONS DE PARFUM, REVETUS D'UNE MATIERE AGGLOMEREE

(30) Priority: 02.04.1996 IT VR960035
(43) Date of publication of application: 03.02.1999
(73) Proprietor: Stone Italiana S.R.L., 37040 Zimella (IT)
(72) Inventor: DALLA VALLE, Roberto, I-37012 Bussolengo (IT)
(74) Representative: Petraz, Gilberto Luigi
(86) International application number: IT9700070
(87) International publication number: WO9736734

(56) References cited:
- DD-A- 122 057
- US-A- 3 994 763
- DATABASE WPI Week 8238 12 August 1982 Derwent Publications Ltd., London, GB; AN 82-79763E XP002023692 & JP 57 129 883 A (CARLSTONE KK)

## Description

### TECHNICAL FIELD

The invention relates to a process for the production on an industrial scale of generally small size containers, for example scent bottles, clad in agglomerate material, being in this case constituted by a mixture of marble and/or quartz and/or sands and/or bonding resins and/or granite, possibly even comprising quantities of various type of material (metal, glass, wood and the like).

The invention further relates to containers, for examples scent bottles, manufactured according a process of this type.

### BACKGROUND ART

The prior art teaches a production process for panels and slabs in agglomerate material, for examples constituted by marble and/or sand and/or quartz and/or quantities of various types of material (metals, glass, ceramics, wood, precious stones and the like), or granites, quartzes or sands bonded with predetermined quantities of bonding resins.

A process of this type comprises various working phases, as follows:
- a first phase in which the various materials constituting the agglomerate are fragmented;
- a second phase wherein the fragmented materials are mixed to obtain a product as homogeneous as possible, during which phase the bonding resins are added;
- a third phase of pressing and compacting the agglomerate, during which the correct shape is achieved;
- a fourth phase of panel hardening, performed at a predetermined temperature;
- a fifth phase in which both faces of the panel are subjected to sanding and buffing;
- a sixth phase of cutting to size, chamfering, gauging and countersinking of the panel, after which the final products are unloaded.

A process such the above-described enables production of panels or slabs in agglomerate material with predetermined lengths, breadths and thicknesses, the whole process being continuously performed by a special machine.

Document JP-A-57129883 discloses an empty bottle which is sealed with a plug and then dipped up to its shoulder in a first mixture obtained by mixing flyash, cement, white marble powder, siliceous sand, synthetic resin adhesive, pigment and water.

After a drying operation, a second mixture consisting of flyash, cement, white marble powder, synthetic resin adhesive, and a pigment of different colour from the pigment of the first mixture is coated on the dried surface of said bottle.

Unevenness is then formed on the coating layer while the bottle is rotated; after it is dried, the neck of the bottle is dipped into the second mixture and dried.

The bottom of the bottle is then polished to prepare a kerbstone of wood-like appearance.

### DESCRIPTION OF THE INVENTION

The present invention exploits a process similar to the above-described in order to clad various types of objects with an agglomerate material and, in the present example, to clad scent bottles so that an aesthetically desired shape thereof can be obtained.

This is achieved by means of a process having the characteristics described in the main claim.

The dependent claims describe especially advantageous embodiments of the process according to the invention.

Further, claim 5 describes a scent bottle covered with agglomerate material, obtained by means of the process according to the invention.

According to a feature of the invention, during the pressing and compacting phase of the process producing containers clad with agglomerate material, various containers, generally glass or plastic scent bottles, are submerged in series in the agglomerate.

Once the pressing phase and the consequent hot or cold catalysis reaction have been completed, the resulting panel of agglomerate contains, sunk within the panel iteself, the series of containers covered with the agglomerate material.

The panel is then subdivided by cutting or sawing into a number of elements corresponding to a number of containers sunk therein, and each container is subjected, manually or automatically, to phases of milling, turning and buffing so that the agglomerate material coating obtains the desired external shape, thus attaining the aims of the invention.

### DESCRIPTION OF A FORM OF EMBODIMENT

The materials used for the production on an industrial scale of agglomerate material panels are generally constituted by mixtures of:
- marbles, of various type of colouring, bonded with bonding resins;
- marbles bonded with quartzes in predetermined proportions;
- marbles bonded with sands quartzes in predetermined proportions;
- sands bonded with bonding resins;
- quartzes bonded with bonding resins;
- granites bonded with bonding resins;
- marbles to which metals, glass, ceramic, wood, precious stones and the like are added during the process.

The process of manufacturing such panels is performed in an automated plant which is provided with one or more computers checking and controlling each working phase. The first phase of the process comprises fragmenting the various marble or granite materials comprised in the agglomerate into granules - obviously sand is generally available in every dimension or size and needs no fragmenting.

In a second phase the fragmented materials are mixed together in a special mixer, during which phase the bonding resin is added.

In a third phase, the mixed product is poured into a press mould which, by application of a pressing force on the product and with the use of a vibrating device and a vacuum-creating device, produces a panel with a .predetermined shape, generally quadrangular, thickness and density.

Subsequently the material of the panel is subjected to a first phase of hardening, carried out using a preformed slab; at the end of this phase the surface of the material exhibits a series of cavities, each suitable for receiving an object such as a scent bottle.

According to the invention, a series of objects, advantageously containers, for example scent bottles, is arranged inside the pressing mould, each object being housed in a cavity obtained as above described.

Subsequently, a further quantity of mixed material to be pressed is poured into the mould, covering all the containers and the new mould is subjected to another phase of vacuum pressing and vibrating.

After this phase of pressing, the objects, in this case the bottles, are sunk in the compacted agglomerate. Subsequently, the panel containing the objects is first conveyed to a kiln in which by addtion of chemical adjuvants a catalysis reaction takes place, resulting in the panel hardening phase, performed at a predetermined temperature and for a specific length of time in the kiln.

The panel exiting from the kiln is then conveyed towards other work-stations to be subjected to further treatments, essentially comprising the cutting of the panel into various portions, each of which contains an object, in this case a scent bottle clad with agglomerate material, the milling and/or the turning of each portion to emphasise the shape of the clad object, and also the rubbing down and buffing of the bottle which can then be conveyed to other stations for eventual waxing, drying and packing.

The objects thus obtained are covered with the agglomerate material achieving an aesthetically desired shape.

The above-described invention relates to a preferred form of embodiment thereof. However, it is clear that the invention is not limited exclusively to this form of embodiment and it englobes a plurality of variants falling within its aims and within the field of technical equivalences.

By way of example, the above-described catalysis process performed inside a kiln can also be carried out in cold conditions, obviously implying longer production times.

## Claims

1. A process for industrial scale production of objects covered with an agglomerate material composed of products comprising powders of marble and/or granite and/or sands and/or quartz and bonding resins, also possibly quantities of metal, glass, ceramic, wood, precious stones, said process comprising the following working phases:
a) fragmentation of the materials constituting the agglomerate;
b) mixing of the constituting products;
c) pressing and compacting in moulds of said products for obtaining a panel of a predetermined size;
d) hot and/or cold catalysis reaction of the panel for a predetermined time;
said process being characterized in that before phase c) a series of objects is arranged in the pressing mould of the products mixed in phase b), and in that during phase c) said series of objects is sunk into the agglomerate, the external surface of said objects being thus covered by said agglomerate.

2. A process as claimed in claim 1, characterized in that said process is carried out by means of an automatic system comprising a number of automatic machines a functioning of which is controlled by means of a suitable computer, said machines being suitable for carrying out phases a) and d).

3. A process as claimed in anyone of the preceding claims, characterized in that said objects are constituted by containers, advantageously by scent bottles, in that before inserting said objects inside said pressing mould, the agglomerate is subjected to a pressing phase using a preformed slab for shaping in the material a series of cavities capable of receiving said objects, and in that, after inserting said objects in said cavities, further agglomerate material is poured into the pressing mould in order to cover said objects entirely, the whole being therefore subjected to a further pressing phase.

4. Process as claimed in anyone of the preceding claims, characterized in that after said phase d) said panel is subdivided into as many portions as the number of objects contained in the panel itself, and in that each portion is subsequently subjected to milling and/or turning and/or manual or automatic buffing, in order to emphasise the shape of the object covered with the agglomerate material.

5. A scent bottle covered in agglomerate material constituted by products comprising powders of marble and/or sands and/or quartz and bonding resins, with possible additions of quantities of metal, glass, ceramic, wood, precious stones, characterized in that it is obtained by means of a process as claimed in anyone of the preceding claims.

## Patentansprüche

1. Verfahren zur gewerblichen Produktion von Gegenständen, die mit Agglomeratmaterial verkleidet sind, das aus Marmor- und/oder Granit- und/oder Sand- und/oder Quarzkörnchen und harzhaltigen Bindemitteln mit möglichen Einschlüssen von Metall, Glas, Keramik, Holz, Edelsteinen gebildeten Produkten besteht, wobei das Verfahren die folgenden Arbeitsphasen umfaßt:
a) Grobmahlung der Produkte, aus denen sich das Agglomeratmaterial zusammensetzt;
b) Vermischung der Bestandteile der genannten Produkte;
c) Pressen und Kompaktieren der genannten Produkte in einer Form zur Herstellung eine Platte mit vorgegebenen Abmessungen;
d) Katalysereaktion der Platte, in warmen und/oder kalten Zustand, für eine vorbestimmte Zeitdauer;
dadurch gekennzeichnet, daß vor Phase c) eine Reihe von Gegenständen in die Preßform der in der Phase b) vermengten Produkte gegeben werden, und dadurch, daß während der Phase c) diese Reihe Gegenständen in dem Agglomeratmaterial eingebettet wird, wobei die Außenfläche dieser Gegenstände dann mit dem Agglomeratmaterial verkleidet ist.

2. Verfahren nach Anspruch 1, dadurch gekennzeichnet, daß das es mittels einer automatischen Anlage mit einer Reihe automatischer Maschinen ausgeführt wird, deren Betrieb von einem entsprechenden Rechner gesteuert wird, wobei diese Maschinen in der Lage sind, die Phasen von a) bis d) durchzuführen.

3. Verfahren nach einem der vorherigen Ansprüche, dadurch gekennzeichnet, daß die Gegenstände aus Behältern, vorteilhafterweise aus Parfümflaschen bestehen, und dadurch, daß das Agglomeratmaterial vor dem Einfüllen der Gegenstände in die Preßform einem Preßvorgang mittels einer vorgeformten Platte unterzogen werden, um im Material eine Reihe Ausbuchtungen zu bilden, die die Gegenstände aufnehmen, und dadurch, daß infolge der Anordnung der Gegenstände in diesen Ausbuchtungen weiteres Agglomeratmaterial in die Preßform gegeben wird, um die Gegenstände völlig einzubetten, wobei die Gesamtheit dann einem letzten Preßvorgang unterzogen wird.

4. Verfahren nach einem der vorherigen Ansprüche, dadurch gekennzeichnet, daß im Anschluß an die Phase d) die Platte in mehrere Portionen geteilt wird, die der Anzahl der in der selben Platte enthaltenen Gegenstände entspricht, und dadurch, daß jede einzelne Portion anschließend einem Fräs- und/oder Dreh- und/oder manuellen oder automatischen Poliervorgang unterzogen wird, um die Form des mit Agglomeratmaterial verkleideten Gegenstandes hervorzuheben.

5. Parfümflasche, die mit einem Agglomeratmaterial verkleidet ist, das aus Produkten besteht, die aus Marmor- und/oder Granit- und/oder Sand- und/oder Quarzkörnchen und harzhaltigen Bindemitteln mit möglichen Einschlüssen aus Metall, Glas, Keramik, Holz, Edelsteine zusammengesetzt sind, dadurch gekennzeichnet, daß sie anhand eines Verfahrens nach irgendeinem der vorherigen Ansprüche hergestellt ist.

## Revendications

1. Procédé pour la production à niveau industriel d'objets revêtus d'un matériau aggloméré constitué de produits incluant des poudres de marbre et/ou de granit et/ou des sables et/ou du quartz et des résines liantes, ainsi que des quantités éventuelles de métaux, verre, céramique, bois, pierres précieuses, ledit procédé comportant les étapes de travail suivantes:
a) broyage des matériaux constitutifs de l'aggloméré;
b) mélange desdit produits constitutifs;
c) pressage et compactation en moules desdits produits au but d'obtenir un panneau ayant des dimensions prédéterminées;
d) réaction de catalysation à chaud et/ou à froid dudit panneau pendant un temps prédéterminé;
ledit procédé étant caractérisé en ce qu'avant l'étape c) une série d'objets est placée dans le moule de pressage des produits mélangés pendant l'étape b), et en ce que pendant l'étape c) ladite série d'objets est noyée dans l'aggloméré, la surface extérieure desdits objets étant donc revêtue par ledit aggloméré.

2. Procédé selon la revendication 1, caractérisé en ce qu'il est mis en oeuvre au moyen d'un système automatique comportant des machines automatiques dont le fonctionnement est contrôlé par un ordinateur opportun, lesdites machines pouvant exécuter les étapes a) et d).

3. Procédé selon l'une quelconque des revendications précédentes, caractérisé en ce que lesdits objets sont formés par des récipients, avantageusement par des flacons de parfum, en ce qu'avant de placer lesdits objets dans le moule de pressage l'aggloméré est soumis à une étape de pressage en utilisant un panneau préformé pour former dans le matériau une série de cavités pouvant recevoir lesdits objets, et en ce qu'après l'insertion desdits objets dans lesdites cavités de l'autre matériau aggloméré est versé dans le moule de pressage au but de récouvrir complètement lesdits objets, l'ensemble étant par la suite soumis à une étape de pressage ultérieure.

4. Procédé selon l'une quelconque des revendications précédentes, caractérisé en ce qu'après ladite étape d) ledit panneau est subdivisé en aussi beaucoup de portions que le numéro d'objets conténus dans ledit panneau, et en ce que chaque portion est par la suite soumise à fraisage et/ou tournage et/ou astiquage manuel ou automatique pour emphatiser la forme de l'objet revêtu par le matériau aggloméré.

5. Un flacon de parfum révêtu par un matériau aggloméré constitué de produits incluant des poudres de marbre et/ou des sables et/ou du quartz et résines liantes, avec l'adjonction éventuelle d'une certaine quantité de métaux, verre, céramique, bois, pierres précieuses, caractérisé en ce qu'il est obtenu au moyen d'un procédé selon l'une quelconque des revendications précédentes.
